(19) Europäisches Patentamt
European Patent Office
Office européen des brevets

(11) **EP 2 584 779 A1**

(12) **EUROPEAN PATENT APPLICATION**

(43) Date of publication:
**24.04.2013 Bulletin 2013/17**

(51) Int Cl.:
*H04N 7/26* *(2006.01)*     *H04N 5/20* *(2006.01)*

(21) Application number: **11306356.4**

(22) Date of filing: **20.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Bordes, Philippe**
**35890 Laille (FR)**

• **Andrivon, Pierre**
**35340 Liffre (FR)**
• **Salmon, Philippe**
**35250 St. Sulpice La Forët (FR)**

(74) Representative: **Streit, Arend et al**
**Deutsche Thomson OHG**
**European Patent Operations**
**Karl-Wiechert-Allee 74**
**30625 Hannover (DE)**

Remarks:
The application is published incomplete as filed (Rule 68(1) EPC).

(54) **Method and device for encoding a video frame, method and device for decoding a video frame and storage medium**

(57)     A method and a device are described for modifying a video frame for encoding or decoding wherein values of pixels of the video frame are represented an increased bit depth.

The described method comprises using processing means for executing the step of offsetting the pixel values of increased bit depth with offsets, the offsets depending on a spatial neighbourhood of the pixel to-be-offset.

Such local adaptive offsetting of pixel values de-emphasizes high frequencies in the transform domain artificially emphasized by the bit depth increase.

Fig. 3

**Description**

TECHNICAL FIELD

The invention is made in the field of video frame encoding. More precisely, the invention is concerned with encoding and decoding of video frames using Internal Bit Depth Increase (IBDI).

BACKGROUND OF THE INVENTION

Internal Bit Depth Increase (IBDI) allows extending transforms precision and reference frames buffer precision and can be used for improving codecs' performances significantly.

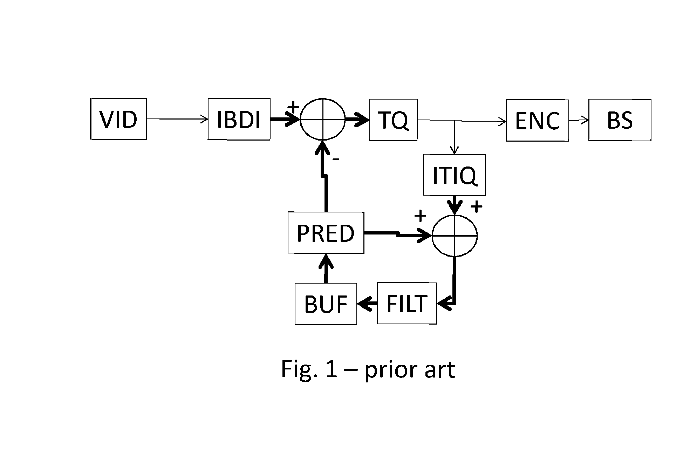

As exemplarily depicted in Fig. 1, the principle of IBDI is to increase the original bit depth of the original frame samples VID of an InputBitDepth by bitIncrement to an increased bit depth. In the Figure, bold arrows depict flow of data of increased bit depth while normal arrows depict flow of data of original bit depth. IBDI is done prior to transforming and quantizing TQ a residual with respect to a prediction PRED for encoding ENC into a bit stream BS. For prediction, reconstructed reference frames of increased bit depth are used, the reconstructed reference frames resulting from inverse quantization and inverse transformation ITIQ and are subjected to a de-blocking and in-loop filtering FILT before being buffered BUF.

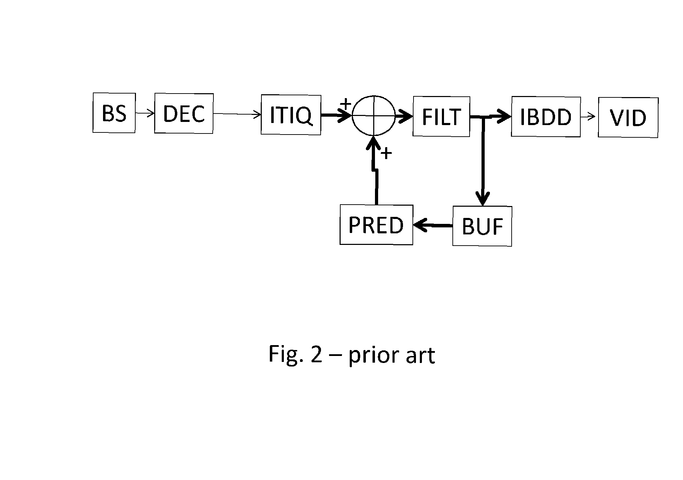

At decoder side, as exemplarily depicted in Fig. 2, an internal bit depth decrease IBDD is applied, after a bit stream BS is received, decoded DEC, inverse quantized and inverse transformed ITIQ, combined with a prediction PRED coming from a buffer BUF and filtered with the de-blocking and in-loop filtering FILT. After bit depth decrease IBDD the video is output. The decoded residuals and the reference frames used for prediction are of said increased bit depth and first a reconstructed frame of said increased bit depth is reconstructed which is then bit depth reduced to regain the frame.

The increase of bit depth can be achieved by left shifting (i.e. adding bitIncrement zeroes on the right of the sample value), for instance.

SUMMARY OF THE INVENTION

The inventors recognized that bit depth increase by, e.g., left shifting actually spreads the non-zero differences between consecutive spatial samples, e.g. a bit shift by one bit doubles a non-zero difference between consecutive samples, which begets fronts and leads to emphasized high frequencies in the transform domain. Thus, coding efficiency may be reduced.

Therefore, it is proposed a method according to claim 1 and a device according to claim 9 for modifying a video frame for encoding or decoding wherein values of pixels of the video frame are represented an increased bit depth. The proposed method comprises using processing means for executing the step of offsetting the pixel values of increased bit depth with offsets, the offsets depending on a spatial neighbourhood of the pixel to-be-offset. The device comprising said processing means for executing the step of offsetting the pixel values.

Such local adaptive offsetting of pixel values de-emphasizes high frequencies in the transform domain of bit depth increased signals.

In an embodiment, the offsets depend on values of neighbouring pixels in the spatial neighbourhoods.

In said embodiment the offsets may depend on numbers of those of the neighbouring pixels which have pixel values larger than the value of the pixel to-be-offset.

In a further embodiment the offsets are no larger than a maximum offset, the maximum offset depending on a number of bits by which bit depth is increased.

It is further proposed a method, as well as a corresponding device, for encoding a video frame wherein values of pixels of the video frame are represented an increased bit depth. Said encoding method comprises modifying the video frame according the proposed method for video frame modification or one of the embodiments thereof.

In an embodiment, the reference video frame used for residual encoding is also modified according the proposed method for video frame modification or one of the embodiments thereof.

It is further proposed a method, as well as a corresponding device, for decoding a video frame wherein values of pixels of the video frame are represented with an increased bit depth, said method comprising modifying a reference video frame according the proposed method for video frame modification or one of the embodiments thereof and reconstructing the video frame using a decoded residual and the modified reference video frame.

A non-transitory storage medium is also proposed, the non-transitory storage medium carrying an encoded video frame, the video frame being encoded according to the proposed method for video frame encoding or the embodiment of this method.

The features of further advantageous embodiments are specified in the dependent claims.

BRIEF DESCRIPTION OF THE DRAWINGS

Exemplary embodiments of the invention are illustrated in the drawings and are explained in more detail in the following description. The exemplary embodiments are explained only for elucidating the invention, but not for limiting the invention's disclosure or scope defined in the claims.
In the figures:

Fig. 1     depicts an exemplary prior art encoder architecture;

Fig. 2     depicts an exemplary prior art decoder architecture;

Fig. 3     depicts a first exemplary application of the proposed adaptive offsetting in an encoder,

Fig. 4     depicts a second exemplary application of the proposed adaptive offsetting in an encoder,

Fig. 5     depicts a third exemplary application of the proposed adaptive offsetting in an encoder,

Fig. 6     depicts a fourth exemplary application of the proposed adaptive offsetting in an encoder,

Fig. 7     depicts a fithfth exemplary application of the proposed adaptive offsetting in an encoder,

Fig. 8     depicts a first exemplary application of the proposed adaptive offsetting in a decoder,

Fig. 9     depicts a second exemplary application of the proposed adaptive offsetting in a decoder,

Fig. 10    exemplarily illustrates the effect of non-zero difference spreading due to bit depth increase and reduction of the effect of said non-zero difference spreading due to the proposed adaptive offsetting;

Fig. 11    depict exemplary neighbourhoods of a current pixel.

EXEMPLARY EMBODIMENTS OF THE INVENTION

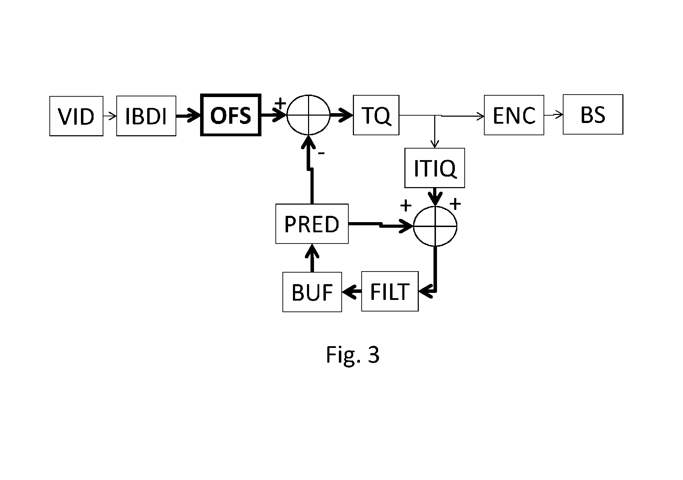

The invention may be realized on any electronic device comprising a processing means correspondingly adapted. For instance, the invention may be realized in a television, a mobile videophone, a personal computer, a digital video camera, a navigation system or a car video system.
In a first exemplary embodiment exemplarily depicted in Fig. 3, it is proposed to modify at encoder side the "Bit-Depth-Increase" function with an IBDI post-processing (also called IBDI Filter or adaptive offsetting) in order to reduce the range of the non-zero differences, also called gaps, between adjacent samples in a frame of increased bit depth. This is done by applying the filter IBDI to the video signal of increased bit depth prior to determination of a residual between the video signal of increased bit depth and a prediction PRED thereof.
Advantageously but not necessarily, the adaptive IBDI Filter function has the property that most significant bits remain unchanged wherein the most significant bits of the sample are the bits prior to IBDI.
Many filter designs are possible. In an exemplary embodiment, the IBDI Filter is a non-linear low pass filter adding an offset which depends on values of adjacently neighboring samples. The offset value is in the range $[0; (2^{bitIncrement}-1)]$ wherein *bitIncrement* is the difference between the original bit depth and the increased bit depth.
An example of such non-linear low pass filter adding an offset is the following offset function:

$$Offset(x_{cur}) = Min\{ (\alpha * 2^{bitIncrement}; (2^{bitIncrement} - 1) \}$$

wherein
$X_{cur}$ denotes the position of a given pixel in the frame,
$N(X_{cur})$ denotes the set of pixel positions in the neighborhood of $X_{cur}$ without $X_{cur}$,
$Nb(X_{cur})$ denotes the number of pixel in the neighborhood

$$N(x_{cur}) \ (Nb(x_{cur})\text{-connexity}), \ Nb(x_{cur}) = \#( \ \{ \ N(x_{cur}) \ \} \ )$$

C(x) denotes the original component sample value before "Bit-Depth-Increase" at the position x in the frame, $Cpt(X_{cur})$ denotes the number of pixels in the neighborhood of $X_{cur}$ with component value greater than the component value of $X_{cur}$:

$$Cpt(x_{cur}) = \#( \ \{ \ x_n \in N(x_{cur}) \mid \ C(x_n) > C(x_{cur}) \} \ )$$

and $\alpha = Cpt(X_{cur}) / Nb(X_{cur})$.

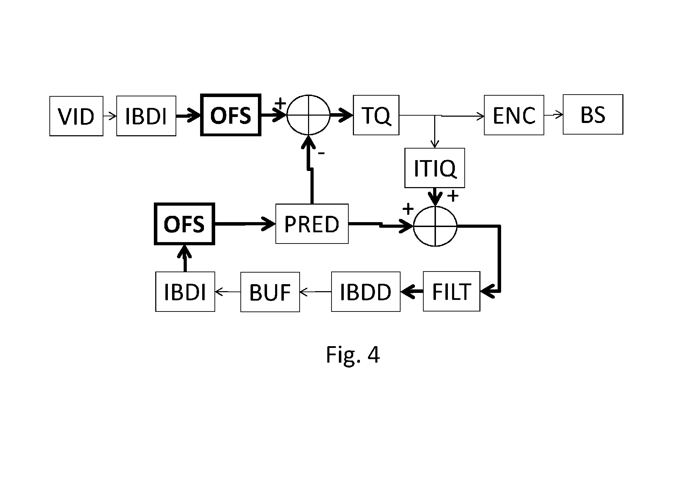

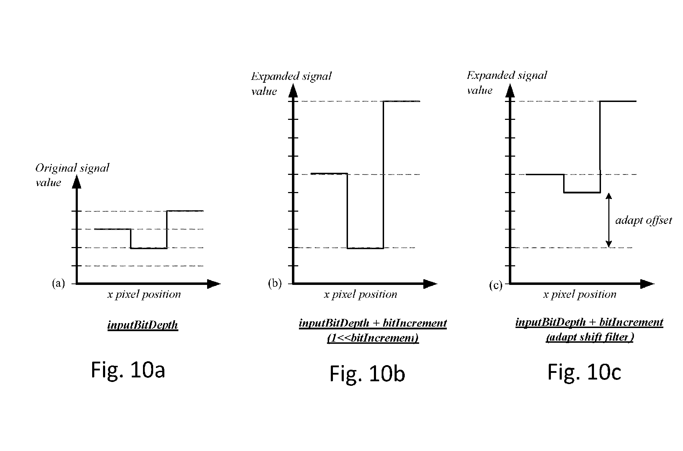

Advantageously but not necessarily, the IBDI filter process is also applied to pixel values of reference video frames used for inter prediction also known as temporal prediction. This is exemplarily depicted in fig. 4 and fig. 10. In a multi view coding context, the IBDI filter process can also be applied to pixel values of reference video frames of a different view wherein the reference video frames are used for inter-view prediction.

Inter prediction and inter-view prediction makes use of reconstructed reference frames stored in a reference frame buffer BUF.

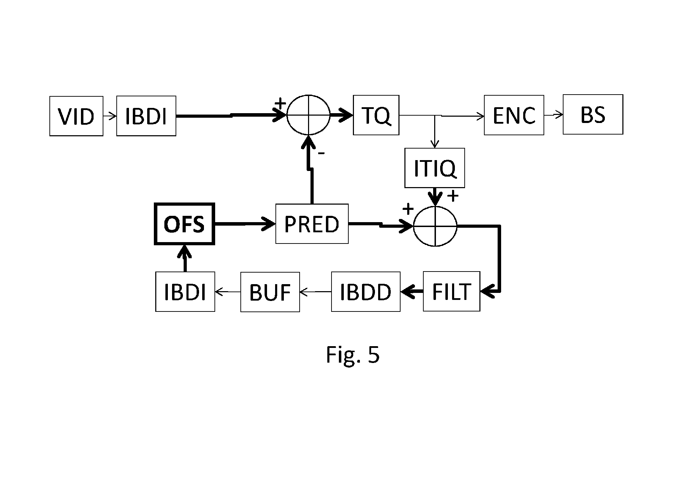

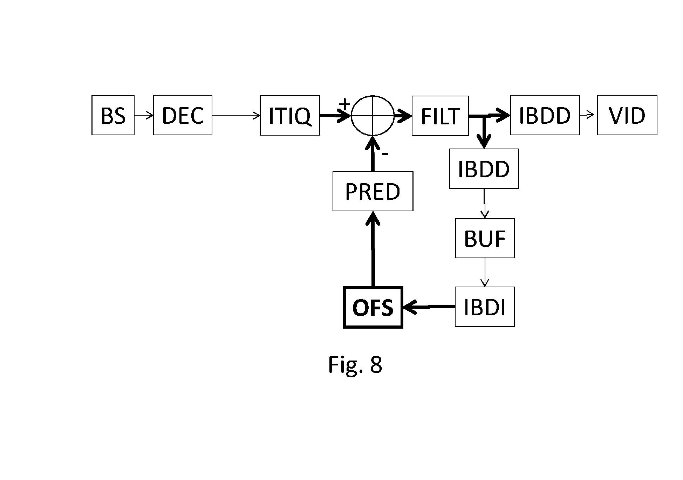

The reconstructed reference frames can be stored with original bit depth or with a bit depth larger than the original bit depth but smaller than the increased bit depth, in order to save storage capacity. In this case, reconstructed reference frames retrieved from the buffer can be bit depth increased IBDI and filtered FILT before using them for prediction PRED, at encoder side as exemplarily depicted in fig. 4 and fig. 5, and at decoder side, as exemplarily depicted in fig. 8.

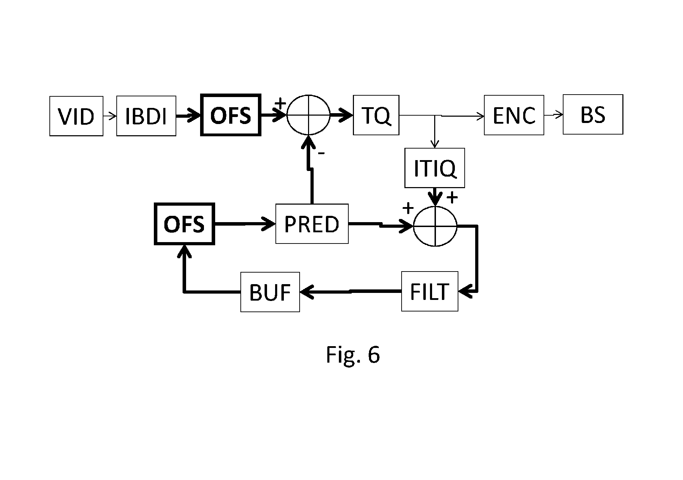

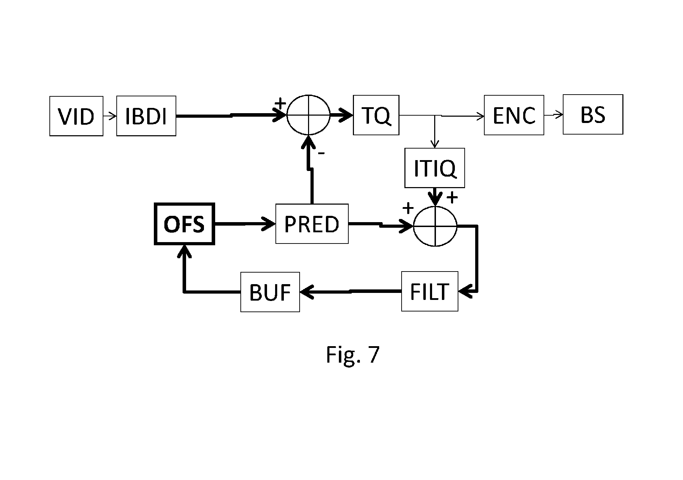

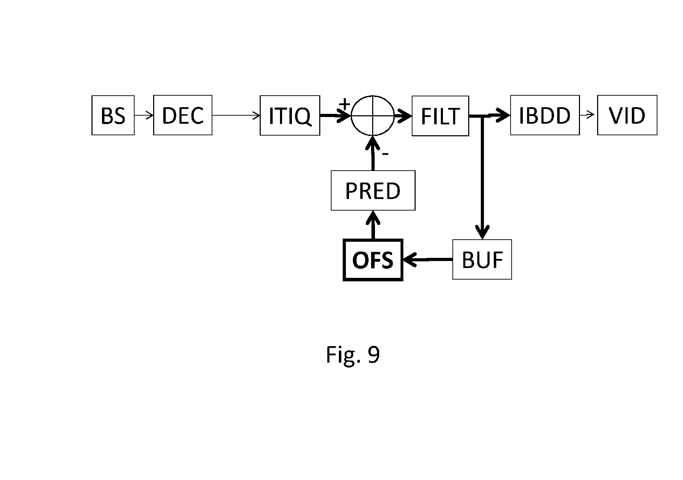

The reconstructed reference frames can be stored with increased bit depth wherein the offset is either maintained, or, for better compression, amended or removed. In this case of storage with increased bit depth, reconstructed reference frames retrieved from the buffer can be filtered before using them for prediction, at encoder side as exemplarily depicted in fig. 6 and fig. 7, and at decoder side, as exemplarily depicted in fig. 9.

Tests of this invention on various video encoders and decoders show that for a given quality level (PSNR) the bit stream size can be reduced significantly, in particular for devices using increased bit depth according to high efficient video codec (HEVC) and/or according to key technology areas (KTA) reference software codec.

The principle of adaptive filtering is exemplarily depicted in Fig. 10 wherein Fig. 10a depicts an exemplarily original signal value, Fig. 10b depicts the spreading of the exemplarily signal values due to increasing the bit depth and Fig. 10c exemplarily depicts reduction of said spreading due to the proposed adaptive offsetting.

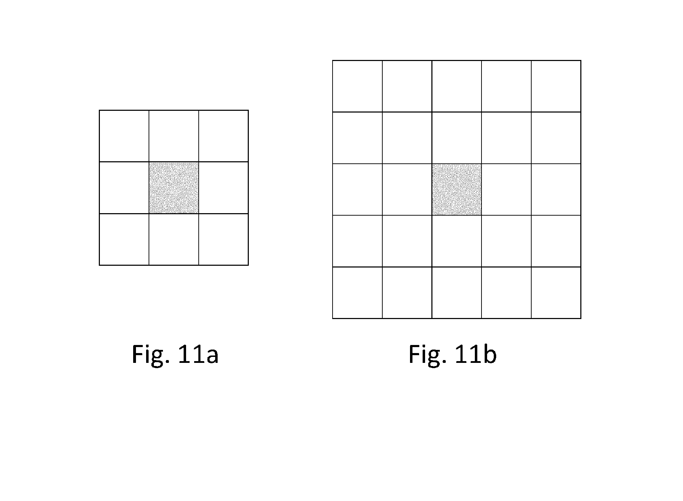

Fig. 11 gives to examples of neighbourhoods. Fig. 11a depicts a neighbourhood consisting of the eight pixels directly adjacent to the pixel to-be-filtered which is depicted in grey; Fig. 11b depicts a larger neighbourhood further comprising all pixels adjacent to the pixels of the neighbourhood depicted in fig. 11a, with exception of the pixel to-be-filtered.

**Claims**

1. Method for modifying a video frame for encoding or decoding wherein values of pixels of the video frame are represented in increased bit depth, said method comprising using processing means for executing the step of

   - offsetting the pixel values of increased bit depth with offsets, the offsets depending on a spatial neighbourhood of the pixel to-be-offset.

2. Method of claim 1, wherein the offsets depend on values of neighbouring pixels in the spatial neighbourhoods.

3. Method of claim 2, wherein the offsets depend on numbers of those of the neighbouring pixels which have pixel values larger than the value of the pixel to-be-offset.

4. Method of claim 1, 2 or 3 wherein the offsets are no larger than a maximum offset, the maximum offset depending on a number of bits by which bit depth is increased.

5. Method for encoding a video frame wherein values of pixels of the video frame are represented an increased bit depth, said method comprising modifying the video frame according to the method of one of claims 1-4 and residual encoding the modified video frame using a reference video frame.

**6.** Method of claim 5 further comprising modifying the reference video frame according to the method of one of claims 1-4 and using the modified reference video frame for prediction.

**7.** Method for decoding a video frame wherein values of pixels of the video frame are represented with an increased bit depth, said method comprising modifying a reference video frame according to the method of one of claims 1-4 and reconstructing the video frame using a decoded residual and the modified reference video frame.

**9.** Device for modifying a video frame for encoding or decoding wherein values of pixels of the video frame are represented an increased bit depth, said device comprising processing means for executing the step of

- offsetting the pixel values of increased bit depth with offsets, the offsets depending on a spatial neighbourhood of the pixel to-be-offset.

**10.** Device of claim 9, wherein the offsets depend on values of neighbouring pixels in the spatial neighbourhoods.

**11.** Device of claim 11, wherein the offsets depend on numbers of those of the neighbouring pixels which have pixel values larger than the value of the pixel to-be-offset.

**12.** Device of claim 9, 10 or 11 wherein the offsets are no larger than a maximum offset, the maximum offset depending on a number of bits by which bit depth is increased.

**13.** Device for encoding a video frame wherein values of pixels of the video frame are represented an increased bit depth, said device comprising the device for modifying the video frame according to one of claims 9-12, said device further comprising means for residual encoding the modified video frame using a reference video frame.

**14.** Device for decoding a video frame wherein values of pixels of the video frame are represented with an increased bit depth, said device comprising the device for modifying a video frame according to one of claims 9-12, said modifying device being used for modifying a reference video frame, said decoding device further comprising means for reconstructing the video frame using a decoded residual and the modified reference video frame.

**15.** Non-transitory storage medium carrying an encoded video frame, the video frame being encoded according to the method of claim 5.

Fig. 1 – prior art

BS → DEC → ITIQ → ⊕ → FILT → IBDD → VID

PRED ← BUF

Fig. 2 – prior art

Fig. 3

Fig. 4

VID → IBDI → (+) ⊕ → TQ → ENC → BS

(−) ← PRED ← OFS

ITIQ → (+) ⊕ (+) ← FILT ← IBDD ← BUF ← IBDI

Fig. 5

Fig. 6

Fig. 7

Fig. 8

BS → DEC → ITIQ → (+) → FILT → IBDD → VID

PRED (-)

OFS ← BUF

Fig. 9

Original signal
value

(a)

*x pixel position*

*inputBitDepth*

## Fig. 10a

Expanded signal
value

(b)

*x pixel position*

*inputBitDepth + bitIncrement*
*(1<<bitIncrement)*

## Fig. 10b

Expanded signal
value

*adapt offset*

(c)

*x pixel position*

*inputBitDepth + bitIncrement*
*(adapt shift filter)*

## Fig. 10c

Fig. 11a

Fig. 11b

Europäisches
Patentamt

European
Patent Office

Office européen
des brevets

# EUROPEAN SEARCH REPORT

Application Number

EP 11 30 6356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOANG (ZENVERGE) D: "Unified scaling with adaptive offset for reference frame compression with IBDI", 95. MPEG MEETING; 24-1-2011 - 28-1-2011; DAEGU; (MOTION PICTURE EXPERT GROUP OR ISO/IEC JTC1/SC29/WG11),, no. m18782, 21 January 2011 (2011-01-21), XP030047352, | 1,2,4-7, 9,10, 12-15 | INV. H04N7/26 H04N5/20 |
| A | * section 4 * * listing 4 and 5 * * figure 1 * ----- | 3,11 | |
| X | CHUJOH (TOSHIBA) T ET AL: "Video coding technology proposal by Toshiba", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. XP030007558, 18 April 2010 (2010-04-18), XP030007559, ISSN: 0000-0049 | 1,2,4-7, 9,10, 12-15 | |
| A | * section 2.7 * * figures 1,2 * ----- | 3,11 | TECHNICAL FIELDS SEARCHED (IPC) H04N G06T |
| X | LIU S ET AL: "Bit-depth scalable coding for high dynamic range video", PROCEEDINGS OF SPIE, SPIE, US, vol. 6822, no. 2, 29 January 2008 (2008-01-29), pages 682200-1, XP002517655, ISSN: 0277-786X, DOI: 10.1117/12.766601 | 1,2,5,9, 10,13,15 | |
| A | * equations (1) and (8) * * sections 3.1 and 3.2 * * figures 2,3 * ----- -/-- | 3,4,6,7, 11,12,14 | |

The present search report has been drawn up for all claims

| Place of search | Date of completion of the search | Examiner |
|---|---|---|
| The Hague | 16 January 2012 | Ferré, Pierre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 11 30 6356

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEUK-HONG CHENG ET AL: "Bit-depth expansion by contour region reconstruction", CIRCUITS AND SYSTEMS, 2009. ISCAS 2009. IEEE INTERNATIONAL SYMPOSIUM ON, IEEE, PISCATAWAY, NJ, USA, 24 May 2009 (2009-05-24), pages 944-947, XP031479355, ISBN: 978-1-4244-3827-3 * section III * * equations (4), (5) and (6) * | 1-7,9-15 | |
| A | CHUN HUNG LIU ET AL: "Bit-depth expansion by adaptive filter", CIRCUITS AND SYSTEMS, 2008. ISCAS 2008. IEEE INTERNATIONAL SYMPOSIUM ON, IEEE, PISCATAWAY, NJ, USA, 18 May 2008 (2008-05-18), pages 496-499, XP031392018, ISBN: 978-1-4244-1683-7 * section III.A * * equations (4)-(7) * | 1-7,9-15 | |
| A | US 2009/097561 A1 (CHIU YI-JEN [US] ET AL) 16 April 2009 (2009-04-16) * paragraph [0029] - paragraph [0032] * * paragraph [0034] - paragraph [0035] * * figures 2,3 * | 1-7,9-15 | TECHNICAL FIELDS SEARCHED (IPC) |
| A | EP 2 169 657 A1 (NEC CORP [JP]) 31 March 2010 (2010-03-31) * paragraph [0015] * * paragraph [0036] - paragraph [0040] * | 1-7,9-15 | |

The present search report has been drawn up for all claims

| Place of search | Date of completion of the search | Examiner |
|---|---|---|
| The Hague | 16 January 2012 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 584 779 A1

**ANNEX TO THE EUROPEAN SEARCH REPORT
ON EUROPEAN PATENT APPLICATION NO.**

EP 11 30 6356

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2012

| Patent document cited in search report | Publication date | Patent family member(s) | Publication date |
|---|---|---|---|
| US 2009097561 A1 | 16-04-2009 | CN 101459845 A<br>CN 102082953 A<br>DE 102008051562 A1<br>JP 2009100472 A<br>TW 200926828 A<br>US 2009097561 A1 | 17-06-2009<br>01-06-2011<br>30-04-2009<br>07-05-2009<br>16-06-2009<br>16-04-2009 |
| EP 2169657 A1 | 31-03-2010 | CN 101689356 A<br>EP 2169657 A1<br>US 2010189349 A1<br>WO 2009004863 A1 | 31-03-2010<br>31-03-2010<br>29-07-2010<br>08-01-2009 |

EPO FORM P0459

For more details about this annex : see Official Journal of the European Patent Office, No. 12/82

19